# EUROPEAN PATENT SPECIFICATION

(11) **EP 1 599 007 B1**
(45) Date of publication and mention of the grant of the patent: **12.09.2007**
(21) Application number: 04291272.5
(22) Date of filing: 18.05.2004
(51) Int. Cl.: H04L 29/06

(54) **Method and server for providing a multi-modal dialog**
Verfahren und Server zur Bereitstellung eines multi-modalen Dialogs
Procede et serveur pour la mise un dialogue multi-modal

(43) Date of publication of application: 23.11.2005
(73) Proprietor: Alcatel Lucent, 75008 Paris (FR)
(72) Inventor: Sienel, Jürgen, 71229 Leonberg (DE); Rössler, Horst, 70794 Fliderstadt (DE); Neubauer, Daniel, 72074 Tübingen (DE)
(74) Representative: Schmidt, Werner Karl

(56) References cited:
- EP-A- 1 304 614
- US-A1- 2003 126 330
- HOSN R ET AL: "Single application model, multiple synchronized views" IEEE, INTERNATIONAL CONFERENCE ON MULTIMEDIA AND EXPO 2001, 22 August 2001 (2001-08-22), pages 685-688, XP010661930
- "MULTI-MODAL DATA ACCESS" RESEARCH DISCLOSURE, KENNETH MASON PUBLICATIONS, HAMPSHIRE, GB, no. 426, October 1999 (1999-10), pages 1393-1396, XP000907811 ISSN: 0374-4353

## Description

The present invention relates to a method of providing a multi-modal dialog between a multi-modal application and a user communicating with the multi-modal application via a client suited to exchange and present documents encoded in standard or extended hyper text mark-up language. The invention further relates to a proxy server for supporting multi-modal dialogs between multi-modal applications and users.

In recent years, computers have been provided with a plurality of different types of input devices, such as a keyboard, a mouse, a touch panel, an image scanner, a video camera, a pen and a microphone to enable various information items to be inputted in various forms. Also a plurality of different types of output devices, such as different forms of display units and a loudspeaker have been provided for outputting various information items in a variety of forms, such as different graphic forms or spoken language. Further, enhanced communication terminals are equipped with different types of input and output devices which enables input and output of information items in various forms.

For example, JP 101 07877 A describes a multi-modal telephone set which uses both, a display and a synthesized voice to communicate with the user.

Further, multi-modal browsers extend the original browser functionality by additional modules such as multi-modal plug-ins, for example SALT or X+V (SALT = Speech Application Language Tags; X+V = XHTML+Voice). But, such multi-modal browsers need extensive computation and memory resources and do not run on small devices with limited resources, for example mobile devices or PDAs (PDA = Personal Digital Assistant).

Hosn, R., et al.: "Single application model, multiple synchronized views", IEEE, International Conference on Multimedia and Expo 2001, 22 August 2001, pages 685-688, describe an application framework facilitating synchronized multi-modal applications by de-coupling application content from its presentation. The application framework is comprised of three main components: a modality-independent application model, transformation rules, and a controller. The application model consists of a data model to be populated via user interaction and a high-level description of the user interaction to be carried out in populating the data model. User interaction is defined in the application model as a sequence of modality-independent building blocks called conversational gestures, e.g., input fields for user input and messages to the user. The controller mediates between the application model and a user's device. The controller represents the sequence of the conversational gestures as a tree structure which is traversed. The controller applies modality-specific transformation rules to render the modality-independent conversational gestures into the specific view of the user's device. In turn, user input is captured by the user's modality specific device and communicated to the controller.

The publication "Multi-modal Data Access", Research Disclosure, Kenneth Mason Publications, Hampshire, Great Britain, no. 426, Oktober 1999, ISSN 0374-4353, pages 1393-1396, describes a standards-open multi-modal system for accessing personal data stored in a back-end data source such as an email server or an address data base. The system consists of three layers: facades, i.e., interfaces to back-end sources, a ReqMux (= Request Multiplexer), i.e., an input processor, and output formatters. A user using a modality-specific client send a request comprising a request type, such as "get message N", and a client-device indicator to the ReqMux which determines which facade the request has to be forwarded to. The corresponding facade extracts the requested data from the source and converts the data from the source-dependent protocol, e.g., POP3, to an internal format, e.g., XML (POP = Post Office Protocol; XML = Extensible Markup Language). Since facades typically only implement a single protocol, each time a new source with a new protocol is added, a new facade must be written. Then, the data from the source has to be converted from the internal format to the device-specific modality by means of an appropriate output formatter.

The publication mentions three ways to implement the formatter: application program, XSL Style Sheet script, and JSP script (XSL = Extensible Style Sheet Language; JSP = Java Server Pages). In the application-based solution, the DOM tree produced from the XML document and the string representation of the DOM tree, respectively, are manipulated by replacing DOM elements without meaning for a specific modality with an appropriate substitute (DOM = Document Object Model). In the XSL-based solution, style sheets are stored in the system server and selected based on the output type requested by the client.

It is the object of the present invention to propose an improved multi-modal system enabling a multi-modal dialog between a multi-modal application and a user.

The object of the present invention is achieved by a method according to claim 1. The object of the present invention is further achieved by a proxy server according to claim 6. The multi-modal proxy establishes multi-modal interactions based on standard browser technology e.g. on a browser based multi-tier web applications. Proxy components perform the client-side multi-modal dialog control and synchronization, which has no longer be done by components of the client. This architecture combines high speed performance with reduced computation power and memory requirements at the client's side. This supports the use of thin clients. Further, it increases flexibility and applicability of multi-modal applications and features since it is sufficient to equip a client with standard browser components to use this client in the context of a multi-modal dialog.

Further, the thin client architecture advances the desktop/location-centric applications to a centralized processing, management and support environment. Thereby, the invention increases the scalability and maintability of the multi-modal system. It provides the ability to scale as business needs change as well as accommodate increased users, transactions volumes and history - and this without performance degradation. Further, it guarantees the co-existence with legacy applications.

Further advantages are achieved by embodiments of the invention indicated by the dependent claims.

According to a preferred embodiment of the invention, a multi-modal system comprises a client with a standard internet browser without add-ons e.g. without a specific plug-in, a multi-modal proxy server responsible for multi-modal session- and dialog-management and a multi-modal server which comprises several resource modules such as a speech recognition, text to speech and handwriting recognition modules. The proxy server sends/receives messages to /from the multi-modal server. Further, it passes HTTP requests (HTTP = Hyper Text Transfer Protocol) to appropriate application and web servers. The proxy server also generates JAVA scripts for embedding multi-modal event handling into HTML/XHTML pages (HTML = Hyper Text Mark-Up Language; XHTML = Extended Hyper Text Mark-Up Language). The multi-modal server features RTP connections (RTP = Real Time Protocol) to input/output devices of the client, for example to the clients microphone and loudspeaker. A multi-modal dialog is composed by using the JAVA scripts. Multi-modal interaction can be applied to HTML elements such as text-add fields, lists, buttons, links etc.

Preferably, the client is a mobile device for example a mobile phone according to the GSM or UMTS standard (GSM = Global System for Mobile Communication; UMTS = Universal Mobile Telecommunication System). The invention empowers such mobile device being equipped with a standard internet browser to support multi-modal interaction. This has significant advantages: A user can select at any times a preferred modality of interaction and is not tight to a particular channel's presentation flow. Thereby, interaction becomes a personal and optimized experience for the user.

According to a preferred embodiment of the invention, the proxy server composes said one or more requested resources into a document presented in standard or extended hyper text mark-up language and transfers the document to the client. The resource transferred by such mechanism towards the client supports parts of the multi-modal interaction which are not supported by standard web-browser functionalities. Additional resources of modality are made available in a simple and efficient way.

Preferably, the proxy server creates a script providing a resource of modality and composes the script into the document. For example, the script initiates the output of a specific voice announcement. But, it is also possible that the proxy server creates a script for embedding multi-modal event handling into the document and composes such a script into the document. Preferably, the proxy server creates in addition a corresponding resource handler providing a proxy side interface for the script. Messages are exchanged according to standard or extended hyper text mark-up language between the script located on the client and the resource handler located on the proxy server. Such messages are used to control resources embedded in the script and to a proxy-side interface provided for such resources to request and receive additional information.

According to a further embodiment of the invention, the proxy server retrieves a resource module according to a modality requested within the multi-modal dialog. Preferably, a multi-modal server provides a set of resource modules, in particular a speech recognition module, a text-to-speech module and a handwriting module.

The proxy server initializes sessions between the client and the retrieved resource modules. Further, it composes multi-modal interactions based on initialized sessions. Preferably, a retrieved resource module communicates with input/output resources of the client via one or more RTP connections (RTP = Real Time Protocol). The proxy server creates a resource handler for the retrieved resource module which communicates via a TCP/IP connection with the resource module (TCP = Transmission Control Protocol; IP = Internet Protocol).

According to a preferred embodiment of the invention, the proxy server creates a resource handler for the retrieved resource module. This resource handler provides a proxy-side interface for a script located on the client and enables the script to exchange information with the retrieved resource module. It becomes possible for a script located on the client to control a resource module or receive information inputted by the user and processed by the resource module. The resource handlers provide a kind of multi-modality application interface to scripts located on the client which makes it possible to embed multi-modal event handling into documents encoded in HTML/XHTML.

These as well as other features and advantages of the invention may be better appreciated by reading the following detailed description of presently preferred exemplary embodiments taken in conjunction with accompanying drawings of which:
- Fig. 1: is a block diagram showing a multi-modal system with a proxy server according to the invention.
- Fig. 2: is a functional view of a multi-modal system with a proxy server according to the present invention.

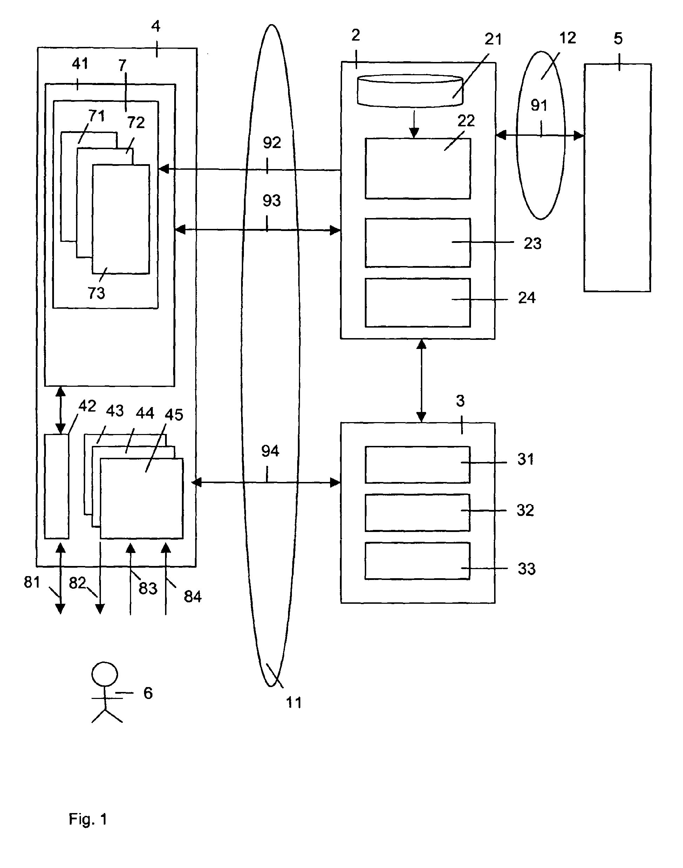

Fig. 1 shows communication networks 11 and 12, a client 4, an application server 5, a proxy server 2 and a multi-modality server 3.

The client 4 is a "thin" client, i.e. a client with reduced processing and memory resources. Preferably, the client 4 is a portable device, for example a PDA (= Personal Digital Assistant) or a smart phone, for example a UMTS phone with multi-modal inputting and outputting capabilities (UMTS = Universal Mobile Telecommunications). But, it is also possible that the client is a data enabled phone, for example a GSM cellular phone with GPRS capability (GSM = Global System for Mobile Communication; GPRS = General Packet Radio Service), a portable computer or a "normal" personal computer.

The client 4 provides a set of two or more different modalities for the interaction with the user 6.

A modality describes the way how information is presented from the client 4 to the user 6 or from the user 6 to the client 4. For example, an information may be submitted as voice message, written information on a screen, by an icon or a graphic display on screen, by pressing a specific key of a keypad, by entering a handwritten command, by a pen, by a mouse pad, by a voice command, by a typed command word or by touching an icon on a touch pad.

Exemplary, Fig. 1 shows four different kind of interactions 81 to 84 between the client 4 and the user 6, each of which assigned to a different modality.

The communication network 11 connects the client 4 with the proxy server 4 and the multi-modal server 3. Further, the communication network 12 connects the proxy server 2 with the application server 5.

The communication networks 11 and 12 enable the exchange of data between the aforementioned components, preferably based on the TCP/IP protocol stack (TCP = Transmission Control Protocol; IP = Internet Protocol).

For example, the proxy server 2, the multi-modal server 3 and the application server 5 are connected via an IP network which is linked with a mobile communication network performing the access network of the client 4 for accessing this IP network (IP = Internet Protocol). In such case, the communication network 11 is formed by a mobile network, for example a GSM or UMTS network and a fixed data network, i.e. the aforementioned IP network. The IP network may be constituted by a plurality of physical communication network, for example ATM, MPLS or Ethernet networks (MPLS = Multi Protocol Label Switching; ATM = Asynchroune Transfer Mode) which are linked via a common level 3 IP protocol. Further, the client 4 and the proxy server 2/the multi-modal server 3 may exchange data via an asynchroune connection (e.g. via a GPRS service or via synchronous connection through the mobile network).

But, it is also possible that the client 4 is a fixed terminal or a terminal connected with the proxy server 2 and the multi-modal server 3 via a WLAN interface. In such case both, the communication network 11 and the communication network 12 are constituted by the aforementioned IP network.

The application server 5 operates one or more multi-modal applications, e.g. applications having multi-modal capability. For example, such applications are encoded in a multi-modal mark-up language, e.g. via HTML+, SALT or X+V. If these applications are contacted by a client, they provide a multi-modal user interface to the user of the respective client.

The client 4 has one or several processors executing software programs and various input/output devices, for example the input/output devices 42, 43, 44 and 45. The execution of such software programs by the processor of the client 4 provides the functionality of a standard WEB-browser 41 suitable to exchange and present documents encoded in HTML or XHTML (HTML = Hyper Text Mark-Up Language; XHTML = Extended Hyper Text Mark-Up Language).The input/output device 42 is a display, a keypad and a mouse pad, the input/output device 43 is a loudspeaker, the input/output device 44 is a microphone and the input/output device 45 is a pen for enabling handwritten inputs.

The proxy server 2 is an IP-server located in an IP-network. But, it is also possible to implement the functionalities of the proxy server 2 into a network access server controlling the access of the client 4 to the aforementioned IP network.

The proxy server 2 is constituted by one or several interconnected computers, a software platform and a plurality of application programs executed based on this platform. The functionalities of the proxy server 2 are provided by the execution of these software programs based on the system platform. From functional point of view, the proxy server 2 provides one or more multi-modal proxies each having a data base 21, a dialog manager 22, a composer 23 and one or more resource handlers 24.

The multi-modal server 3 is an internet server which provides one or more resource modules supporting a multi-modal interaction between the user 6 and the client 4. For example, the multi-modal server 3 comprises the resource modules 31, 32 and 33. The resource module 31 is a speech recognition module, the resource module 32 is a text-to-speed conversion module and the resource module 33 is a handwriting recognition module. The resource modules 31 to 33 of the multi-modal server 3 may be shared by a plurality of multi-modal proxies located at different proxy servers. But, it is also possible that the resource modules 31 to 33 are embedded in the proxy server 2 and solely used by the one or more multi-modal proxies provided by the proxy server 2.

The dialog manager 22 performs multi-model dialog management. When receiving a HTTP message (HTTP = Hyper Text Transfer Protocol) from the client 4 that requests the access of a multi-modal application, it establishes a multi-modal dialog between this multi-modal application and the user 6 of the client 4. It passes the HTTP request in an appropriate form to an appropriate multi-modal application server, for example to the multi-modal application server 5. When receiving a response from the application server 5, it interacts with the client 4 via exchange of information encoded in standard or extended hyper text mark-up language and retrieves at least one additional resource of modality requested within the multi-modal dialog.

For example, the dialog manager 22 creates a set of one or more scripts providing a resource of modality or embedding multi-modal event handling by means of the database 21. It composes the scripts into a HTML or XHTML document sent to the client 4 to be executed by the browser 41. Further, the dialog manager may create a set of one or more resource handlers providing a proxy-side interface for these scripts.

Further, the dialog manager 22 retrieves - based on the response or responses from the application server 5 - one or more of the resource module of the multi-modal server 3 and initializes a session between components of the client 4 and these retrieved resource modules.

For example, the dialog manager 22 creates a HTML document 7 with a set of scripts 71, 72 and 73 and transfers this document as HTTP response 92 to the client 4. The script 71 implements the output of a specific voice announcement and adds the resource "specific voice announcement" as additional resource of modality to the capability set of the browser 41. The script 73 embeds multi-modal event handling into the HTML document 7. For example, the script links the multi-modal event handling with HTML elements of the document 7, such as text-added fields, lists, buttons, links, etc. Preferably, the script 73 exchanges via a communication connection 93 HTML messages or XHTML messages with a corresponding resource handler located at the proxy server 2 which provides a proxy-side application interface for the script 73.

In addition, the dialog manager 22 retrieves resource modules of the multi-modal server 3 according to the specific modalities requested within the multi-modal dialog, i.e. reserves resource modules and bind them to dialog manager 22.

The composer 23 composes a multi-modal interaction with the user 6 based on standard or extended hyper text mark-up language interactions with the client 6 and based on the retrieved additional resources. For example the composer 23 composes a multi-modal interaction in the context of the multi-modal dialog out of the interactions 81 to 84, wherein the interaction 81 is a standard or extended hyper text mark-up interaction, the interaction 82 is a voice announcement created by the script 71, the interaction 83 is a voice input processed by the resource module 31 under control of the composer 23 and the script 73, and the interaction 84 is a handwriting input processed by the resource module 33 under control of the composer 23 and the script 73.

The composer 23 composes the multi-modal dialog with the user 6 according to the information received from the application server 5 and on the events received from the user 6, wherein these events may be pre-processed by the script 73.

For example, the multi-modal application requests the output of an information via voice announcement or the user 6 selects that the output of the information should be done by a voice announcement. The system implements this voice announcement by creating the script 71 and executing the script 71 by the browser 41 or by retrieving the resource module 23, establishing a RTP connection and initializing a session between the resource module 32 and the component 43 of the client 4, and triggering the resource module 32 through the resource handler 24 to create the voice announcement and transfer it to the component 43.

For example, the script 73 detects an event indicating a request from the user to perform a voice input. The script 73 contacts the proxy server 2 which retrieves the resource module 31, initiates the establishment of a RTP connection 94 with the component 44, initiates a session between these components and receives and processes the results of the processing of the resource module 31.

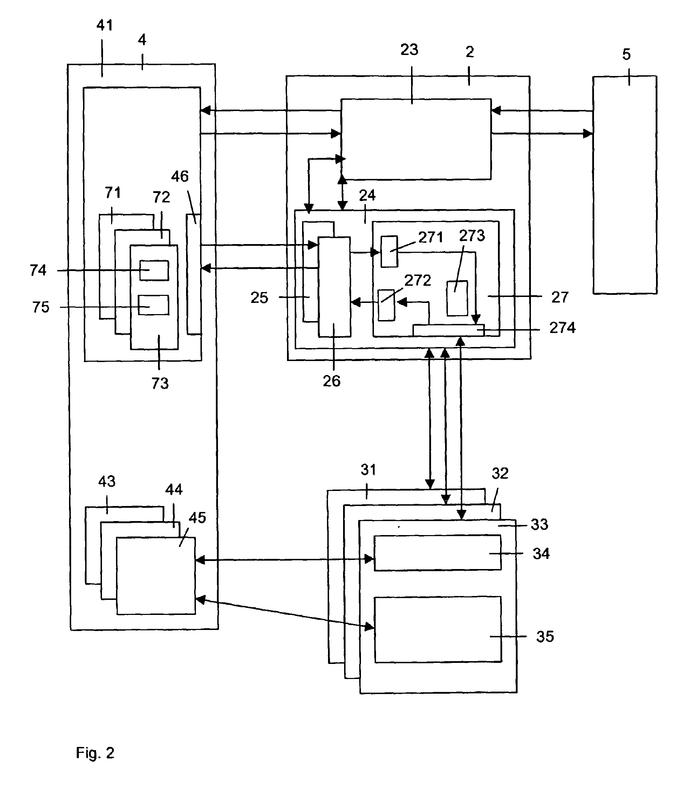

Fig. 2 shows some detailed implementations of the multi-modal system of Fig. 1.
Fig. 2 shows the client 4, the proxy server 2, the application server 5 and the resource modules 31 to 33. The client 4 comprises the WEB-browser 41 and the components 43 to 45.

The scripts 71 to 73 are encoded as JAVA-scripts. The browser 41 comprises an active X-object 46 used by the JAVA-script 73 to invoke a servlet of the proxy server 2 provided by a corresponding JAVA-class. The servlet processes the information and creates correspondent response information which are handled by the active X-object 46 and may be used by the script but without reload of the HTTML document 41.

Within this context, the web-side formed by the document 41 plays the role of a client and the proxy server 2 with the servlet plays the role of the server. The format of the messages exchanged between the client and the server complies with the XML standard.

The JAVA-script 73 has a function (request) inquiring via an XML message "XML request" a method of a servlet "control servlet". The JAVA-script function (request) transfers its input parameter "request XML-string" of the type string to the servlet "control servlet". At the same time it installs an event-handler for the event "on ready state change" of the active X object 46. If the JAVA-script function 74 successfully receives a response from the servlet, the event-handler inquires the function "handle XML response" and hands over the DOM document of the response.

The JAVA-script function 75 named "Handle XML response" expects a DOM document as input, searches through the input to find a node named "mathResponse" and inserts this value in a text field of the document 7.

Preferably, the browser 41 provides a XMLHTTP object that can be used by the JAVA-script 71 to 73. The JAVA-script is running on the client-browser 41 and sends XML-messages to a servlet by using this object. For example, the XMLHTTP object is supported in Microsoft internet Explorer 5.0 or later. Other browsers (e.g. Mozilla and Netscape 6) provide a similar interface.

Information (messages) can be send asynchronously by HTTP from a server to a client without reloading the page. The client makes a non-blocking request to the server that decides the time it replies. This imitates a server-push.

Message summary of the XMLHTTP object:

| | |
|---|---|
| void | open(String method, String url, Boolean async) Initializes a request and specifies the method, URL, and whether the call is asynchronous or not. Methods are "POST" and "GET". |
| void | send(String message) sends the request |
| void | setRequestHeader(String parameter, String value) sets parameters in the HTTP-Header |
| String | response Text() returns the response as String |
| XMLDOM | responseXml() returns the response as XMLDOM |
| EventHandler | onreadystatechange() eventhandler which is called when the readyState changes |
| int | readyState() returns the state of the connection |

On the client-side the Java-Script function named "request ()" is called periodically . If no request is active it opens a new HTTP-Request by calling the POST - command of the XMLHTTP object and sending a message string to a servlet.

The servlet running on the server receives the transmitted string which it can read from the input-stream and interacts with the application. After processing the input-stream and based on the status of the application the servlet formulates its response.

The parameter "async" can be set to TRUE in the POST - command of the XMLHTTP object to run the request asynchronously, which means that there could be some seconds or minutes between sending and receiving without blocking the HTML-Browser. So the servlet can wait for its response until a the push event is triggered by the application. This new information is sent to the client.

The "onreadystatechange" event of the XMLHTTP object is triggered with an "readyState of value 4, when the client has received the response. An event-handler installed on this event can then process the response.

Due to this mechanisms, no reloading of HTTP documents is necessary and the exchange of information between the scripts 71 to 73 and the corresponding resource handlers is invisible for the user.

The resource handler 24 provides a MMAPI-HTTP (MMAPI = Multi-Modal Application Program Interface) interface. It comprises a set of one or more servlets, for example the servlets 25 and 26 interfacing the scripts 71 to 73 and supports the interaction with the scripts 71 to 73 through XML-requests and XML responses. Further, it comprises a set of MMAPI beans interfacing the communication with the resource modules 31 to 33. For example, Fig. 2 shows a MMAPI bean 27 having a socket 274, a request buffer 271, a response buffer 272 and an observer thread 273.

The socket 274 supports the communication between the MMAPI bean 27 and the corresponding resource module, e.g. the resource module 33, via a TCP/IP communication connection. It analyses the request buffer 271 and transfers appropriate requests via this communication connection. The server thread scans the information received via the TCP/IP connection and fills the response buffer if it detects appropriate responses.

The servelets 25 and 26 transfer requests to the request buffer and receives responses from the response buffer via respective fill request and get response functions. Thereby, the system performs a synchronous data transmission between the servlets and the MMAPI beans.

The resources 31 to 33 provide functionalities to communicate with the client 4 via a TCP/IP connection and via a RTP connection. For example, the resource module 33 comprising a communication unit 34 supporting the TCP/IP interface and a communication unit 35 supporting a RTP interface. Each of the resource modules 31 to 33 may simultaneously support multiple clients.

For example, the MMAPI bean 27 sends a session initialization request to the resource module 33, which instantiates a corresponding session with the dedicated component of the client 4 and responses the results of this session.

## Claims

1. A method of providing a multi-modal dialog between a multi-modal application (5) and a user (6) communicating with the multi-modal application (5) via a client (4) providing a set of two or more different modalities for the interaction with the user (6) and suited to exchange and present documents encoded in standard or extended hyper text mark-up language, the method comprising the steps of:
establishing the multi-modal dialog between the multi-modal application (5) and the user (6) through a proxy server (2) interacting with the client (4) via exchange of information encoded in standard or extended hyper text mark-up language;
retrieving, by the proxy server (2), at least one additional resource (71, 72, 73, 31, 32, 33) of modality requested within the multi-modal dialog and;
composing, by the proxy server (2), a multi-modal interaction with the user (6) based on standard or extended hyper text mark-up language interactions (81) with the client and on the retrieved additional resources (71, 72, 73, 31, 32, 33),
**characterized in**
**that** the method comprises the further steps of:
creating, by the proxy server (2), a script (73) for embedding multi-modal event handling and composing the script (73) into a document (7) presented in standard or extended hyper text markup language and sent to the client (4);
retrieving, by the proxy server (2), a resource module (31, 32, 33) according to a modality requested within the multi-modal dialog,
creating, by the proxy server (2), a resource handler (24) for the retrieved resource module (31, 32, 33) providing a proxy-side interface for the script (73) located on the client (4), the resource handler (24) enabling the script (73) to exchange information with the retrieved resource module (31, 32, 33); and initializing a session (94) between the client (4) and the retrieved resource module (31, 32, 33) and composing a multi-modal interaction based on the initialized session (94).

2. The method of claim 1,
**characterized in**
**that** the method comprises the further steps of: composing a set of one or more requested resources (71, 72, 73) into a document (7) presented in standard or extended hyper text mark-up language; and transferring the document (7) to the client (4).

3. The method of claim 2,
**characterized in**
**that** the proxy server (2) creates a script (71) providing a resource of modality and composes the script (71) into the document (7).

4. The method of claim 1,
**characterized in**
**that** the method comprises the further step of creating a resource handler (24) for the retrieved resource module (31, 32, 33), the resource handler communicating via a TCP/IP connection with the resource module (31, 32, 33).

5. The method of claim 1,
**characterized in**
**that** the method comprises the further step of establishing a RTP connection between components (43, 44, 45) of the client (4) and the retrieved resource module (31, 32, 33).

6. A proxy server (2) for supporting multi-modal dialogs between multi-modal applications (5) and users (6) communicating with the multi-modal application by respective clients (4) providing a set of two or more different modalities for the interaction with a user (6) and suited to exchange and present documents encoded in standard or extended hyper text mark-up language, wherein the proxy server comprises: a dialog manager (22) adapted to establish a multi-modal dialog between a multi-modal application (5) and a user (6) through a proxy server (2), to interact with the client (4) via exchange of information encoded in standard or extended hyper text mark-up language and to retrieve at least one additional resource (71, 72, 73, 31, 32, 33) of modality requested within the multi-modal dialog, and a composer (23) for composing a multi-modal interaction with the user based on standard or extended hyper text mark-up language interactions with the client (4) and on the retrieved additional resources (71, 72, 73, 31, 32, 33),
**characterized in**
**that** the proxy server (2) is adapted for:
creating a script (73) for embedding multi-modal event handling and composing the script (73) into a document (7) presented in standard or extended hyper text mark-up language and sent to the client (4);
retrieving a resource module (31, 32, 33) according to a modality requested within the multi-modal dialog,
creating a resource handler (24) for the retrieved resource module (31, 32, 33) providing a proxy-side interface for the script (73) located on the client (4), the resource handler (24) enabling the script (73) to exchange information with the retrieved resource module (31, 32, 33), and
initializing a session (94) between the client (4) and the retrieved resource module (31, 32, 33) and composing a multi-modal interaction based on the initialized session (94).

## Patentansprüche

1. Ein Verfahren der Bereitstellung eines multi-modalen Dialogs zwischen einer multi-modalen Anwendung (5) und einem Anwender (6), der mit der multi-modalen Anwendung (5) über einen client (4) kommuniziert, der einen Satz von zwei oder mehr verschiedenen Modalitäten für die Wechselwirkung mit dem Anwender (6) bereitstellt und geeignet ist, Dokumente, die in Standard oder Erweiterter Hypertext Markup Language codiert sind, auszutauschen und darzustellen, wobei das Verfahren die Schritte umfaßt:
Aufbauen des multi-modalen Dialogs zwischen der multi-modalen Anwendung (5) und dem Anwender (6) durch einen Proxy-Server (2), der mit dem Client (4) über den Austausch von Informationen wechselwirkt, die in Standard oder Erweiterter Hypertext Markup Language codiert sind;
Abrufen mindestens einer zusätzlichen Ressource (71, 72, 73, 31, 32, 33) der Modalität durch den Proxy-Server (2), die innerhalb des multi-modalen Dialogs angefordert wurde und;
Zusammenstellen einer multi-modalen Wechselwirkung mit dem Anwender (6) durch den Proxy-Server (2) auf der Basis der Standard oder Erweiterter Hypertext Markup Language-Wechselwirkungen (81) mit dem Client und der abgerufenen zusätzlichen Ressourcen (71, 72, 73, 31, 32, 33),
**dadurch gekennzeichnet,**
**daß** das Verfahren den weiteren Schritt umfaßt :
Erzeugen eines Scripts (73) durch den Proxy-Server (2) zur Einbettung der multi-modalen Ereignisbehandlung und
Zusammenstellen des Scripts (73) in ein Dokument (7), das in Standard oder Erweiterter Hypertext Markup Language dargestellt ist und an den Client (4) gesendet wurde;
Abrufen eines Ressourcenmoduls (31, 32, 33) durch den Proxy-Server (2) gemäß einer Modalität, die innerhalb des multi-modalen Dialogs angefordert wurde,
Erzeugen eines Ressourcenhandlers (24) durch den Proxy-Server (2) für das abgerufene Ressourcenmodul (31, 32, 33), das eine proxyseitige Schnittstelle für das Script (73) bereitstellt, das sich auf dem Client (4) befindet, wobei der Ressourcenhandler (24) das Script (73) aktiviert, um Informationen mit dem abgerufenen Ressourcenmodul (31, 32, 33) auszutauschen; und Initialisieren einer Session (94) zwischen dem Client (4) und dem abgerufenen Ressourcenmodul (31, 32, 33) und zusammenstellen einer multi-modalen Wechselwirkung auf der Basis der initialisierten Session (94).

2. Das Verfahren nach Anspruch 1,
**dadurch gekennzeichnet,**
**daß** das Verfahren den weiteren Schritt umfaßt: zusammenstellen eines Satzes von einer oder mehr angeforderten Ressourcen (71, 72, 73) in ein Dokument (7), das in Standard oder Erweiterter Hypertext Markup Language dargestellt ist; und Übertragen des Dokuments (7) an den Client (4).

3. Das Verfahren nach Anspruch 2,
**dadurch gekennzeichnet,**
**daß** der Proxy-Server (2) ein Script (71) erzeugt, das eine Ressource der Modalität bereitstellt, und das Script (71) in das Dokument (7) zusammenstellt.

4. Das Verfahren nach Anspruch 1,
**dadurch gekennzeichnet,**
**daß** das Verfahren den weiteren Schritt des Erzeugens eines Ressourcenhandlers (24) für das abgerufene Ressourcenmodul (31, 32, 33) umfaßt, wobei der Ressourcenhandler über eine TCP/IP-Verbindung mit dem Ressourcenmodul (31, 32, 33) kommuniziert.

5. Das Verfahren nach Anspruch 1,
**dadurch gekennzeichnet,**
**daß** das Verfahren den weiteren Schritt des Aufbauens einer RTP-Verbindung zwischen Komponenten (43, 44, 45) des Clients (4) und dem abgerufenen Ressourcenmodul (31, 32, 33) umfaßt.

6. Ein Proxy-Server (2) zur Unterstützung multi-modaler Dialoge zwischen multi-modalen Anwendungen (5) und Anwendern (6), die mit der multi-modalen Anwendung durch jeweilige Clients (4) kommunizieren, die einen Satz von zwei oder mehr verschiedenen Modalitäten für die Wechselwirkung mit einem Anwender (6) bereitstellen und geeignet sind, Dokumente, die in Standard oder Erweiterter Hypertext Markup Language codiert sind, auszutauschen und darzustellen, wobei der Proxy-Server umfaßt: einen Dialogmanager (22), der angepaßt ist, einen multi-modalen Dialog zwischen einer multi-modalen Anwendung (5) und einem Anwender (6) über einen Proxy-Server (2) aufzubauen, um mit dem Client (4) über den Austausch von Informationen, die in Standard oder Erweiterter Hypertext Markup Language codiert sind, zu wechselwirken und mindestens eine zusätzliche Ressource (71, 72, 73, 31, 32, 33) der Modalität abzurufen, die innerhalb des multi-modalen Dialogs angefordert wurde, und einen Composer (23) zum Zusammenstellen einer multi-modalen Wechselwirkung mit dem Anwender auf der Basis der Standard oder Erweiterter Hypertext Markup Language-Wechselwirkungen mit dem Client (4) und der abgerufenen zusätzlichen Ressourcen (71, 72, 73, 31, 32, 33),
**dadurch gekennzeichnet**
**daß** der Proxy-Server (2) angepaßt ist für:
das Erzeugen eines Scripts (73) zur Einbettung der multi-modalen Ereignisbehandlung und das Zusammenstellen des Scripts (73) in ein Dokument (7), das in Standard oder Erweiterter Hypertext Markup Language dargestellt und an den Client (4) gesendet wurde;
das Abrufen eines Ressourcenmoduls (31, 32, 33) gemäß einer Modalität, die innerhalb des multi-modalen Dialogs angefordert wurde,
das Erzeugen eines Ressourcenhandlers (24) für das abgerufene Ressourcenmodul (31, 32, 33), das eine proxyseitige Schnittstelle für das Script (73) bereitstellt, das sich auf dem Client (4) befindet, wobei der Ressourcenhandler (24) das Script (73) aktiviert, um Informationen mit dem abgerufenen Ressourcenmodul (31, 32, 33) auszutauschen, und
das Initialisieren einer session (94) zwischen dem Client (4) und dem abgerufenen Ressourcenmodul (31, 32, 33) und das Zusammenstellen einer multi-modalen Wechselwirkung auf der Basis der initialisierten Session (94).

## Revendications

1. Procédé permettant de fournir un dialogue multi-modal entre une application multi-modale (5) et un utilisateur (6) communiquant avec l'application multi-modale (5) via un client (4) fournissant un ensemble de deux ou davantage de modalités différentes en vue de l'interaction avec l'utilisateur (6) et adapté pour échanger et présenter des documents encodés en langage HTML standard ou étendu, le procédé comprenant les étapes :
d'établissement du dialogue multi-modal entre l'application multi-modale (5) et l'utilisateur (6) par un serveur mandataire (2) interagissant avec le client (4) via l'échange d'informations encodées en langage HTML standard ou étendu ;
d'extraction, par le serveur mandataire (2), d'au moins une ressource supplémentaire (71, 72, 73, 31, 32, 33) de modalité demandée au sein du dialogue multi-modal et ;
de composition, par le serveur mandataire (2), d'une interaction multi-modale avec l'utilisateur (6) sur la base des interactions du langage HTML standard ou étendu (81) avec le client et des ressources supplémentaires (71, 72, 73, 31, 32, 33) extraites,
**caractérisé en ce que**
le procédé comprend les étapes supplémentaires :
de production, par le serveur mandataire (2), d'un scénario (73) en vue d'intégrer un événement multi-modal traitant et composant le scénario (73) dans un document (7) présenté en langage HTML standard ou étendu et envoyé au client (4) ;
d'extraction, par le serveur mandataire (2), d'un module de ressources (31, 32, 33) selon une modalité demandée au sein du dialogue multi-modal,
de création, par le serveur mandataire (2), d'un gestionnaire de ressources (24) pour le module de ressources (31, 32, 33) extrait fournissant une interface du côté du serveur pour le script (73) basé sur le client (4), le gestionnaire de ressources (24) permettant au scénario (73) d'échanger des informations avec le module de ressources (31, 32, 33) extrait ; et d'initialisation d'une session (94) entre le client (4) et le module de ressources (31, 32, 33) extrait et de composition d'une interaction multi-modale sur la base de la session initialisée (94).

2. Procédé selon la revendication 1,
**caractérisé en ce que**
le procédé comprend les étapes supplémentaires de : composition d'un ensemble d'une ou de davantage de ressources (71, 72, 73) dans un document (7) présenté en langage HTML standard ou étendu ; et (7) de transfert du document au client (4).

3. Procédé selon la revendication 2,
**caractérisé en ce que**
le serveur mandataire (2) crée un scénario (71) fournissant une ressource de modalité et compose le scénario (71) dans le document (7).

4. Procédé selon la revendication 1,
**caractérisé en ce que**
le procédé comprend l'étape supplémentaire de création d'un gestionnaire de ressources (24) pour le module de ressources (31, 32, 33) extrait, le gestionnaire de ressources communiquant via une connexion TCP/IP avec le module de ressources (31, 32, 33).

5. Procédé selon la revendication 1,
**caractérisé en ce que**
le procédé comprend l'étape supplémentaire d'établissement d'une connexion RTP entre les composants (43, 44, 45) du client (4) et le module de ressources (31, 32, 33) extrait.

6. Serveur mandataire (2) permettant de supporter des dialogues multi-modaux entre les applications multi-modales (5) et les utilisateurs (6) communiquant avec l'application multi-modale par les clients respectifs (4) fournissant un ensemble de deux ou davantage de modalités différentes en vue de l'interaction avec un utilisateur (6) et adapté pour échanger et présenter des documents encodés en langage HTML standard ou étendu, dans lequel le serveur mandataire comprend : un gestionnaire de dialogues (22) adapté pour déterminer un dialogue multi-modal entre une application multi-modale (5) et un utilisateur (6) par un serveur mandataire (2), interagir avec le client (4) via l'échange d'informations encodées en langage HTML standard ou étendu et extraire au moins une ressource supplémentaire (71, 72, 73, 31, 32, 33) de modalité demandée au sein du dialogue inulti-modal, et un compositeur (23) permettant de composer une interaction multi-modale avec l'utilisateur sur la base des interactions du langage HTML standard ou étendu avec le client (4) et des ressources supplémentaires (71, 72, 73, 31, 32, 33) extraites,
**caractérisé en ce que**
le serveur mandataire (2) est adapté à :
la création d'un scénario (73) en vue d'intégrer un événement multi-modal traitant et composant le scénario (73) dans un document (7) présenté en langage HTML standard ou étendu et envoyé au client (4) ;
l'extraction d'un module de ressources (31, 32, 33) selon une modalité demandée au sein du dialogue multi-modal,
la création d'un gestionnaire de ressources (24) en vue d'extraire le module de ressources (31, 32, 33) extrait fournissant une interface du côté du serveur mandataire pour le scénario (73) basé sur le client (4), le gestionnaire de ressources (24) permettant au scénario (73) d'échanger des informations avec le module de ressources (31, 32, 33) extrait, et
l'initialisation d'une session (94) entre le client (4) et le module de ressources (31, 32, 33) extrait et la composition d'une interaction multi-modale sur la base de la session initialisée (94).
